# EUROPEAN PATENT APPLICATION

(11) **EP 4 721 555 A1**
(43) Date of publication of application: **08.04.2026**
(21) Application number: 25204957.2
(22) Date of filing: 26.09.2025
(51) Int. Cl.: A01J 5/017, A01J 5/003, B62D 57/032

(54) **SYSTEM FOR MILKING A GROUP OF MILKING ANIMALS AND METHOD USING SUCH A SYSTEM**

(30) Priority: 02.10.2024 NL 2038750
(71) Applicant: Lely Patent N.V., 3147 PB Maassluis (NL)
(72) Inventor: VAN DEN BERG, Karel, 3147 PB Maassluis (NL); VERWAAL, Maurice, 3147 PB Maassluis (NL); BUIJS, Martinus Cornelis Johannes, 3147 PB Maassluis (NL); OOSTERBAAN, Robin, 3147 PB Maassluis (NL)
(74) Representative: Octrooibureau Van der Lely N.V.

(57) **Abstract**

A system and method for milking a group of milking animals (6), the system comprising an accommodation space for the milking animals (6), a milk storage tank, and an automatic milking system for the automatic milking of milking animals (6), wherein the milking system comprises at least one milking station (7) provided with milking cups (8) for milking the animals (6), said milking cups (8) being connected to the milk storage tank by means of milk discharge means comprising at least one flexible milk line, wherein the system further comprises at least one autonomous, self-propelled, legged vehicle (1) provided with a gripping means (4), the legged vehicle (1) being configured for automatically gripping and attaching milking cups (8) to the teats of a milking animal (6) in a milking station (7). In that way, a user-friendly, animal-friendly, economical and reliable milking system and method are realized.

## Description

The present invention relates to a system for milking a group of milking animals, the system comprising an accommodation space for the milking animals, a milk storage tank, and an automatic milking system for the automatic milking of milking animals, wherein the milking system comprises at least one milking station provided with milking cups for milking the animals, said milking cups being connected to the milk storage tank by means of milk discharge means comprising at least one flexible milk line. The invention also relates to a method for milking a group of milking animals using such a system.

Such systems and methods are known in the art.

WO2017/034392 discloses a milking system with at least one autonomous self-propelled trolley provided with teat cups. The milk lines of the teat cups hinder the movements of the trolley. WO2017/034393 also shows such a system in one embodiment, and in a further embodiment a system is described wherein a robot arm is provided on a guide rail for attaching teat cups to the teats of a milking animal. The teat cups may be provided on the robot arm itself or in a separate milking cup holder near a milking station, in which case the robot arm is configured for gripping the teat cups. The freedom of movement of the robot arm is limited. In WO2015/140780 a system and method for treating livestock is described, in which an autonomously movable mobile unit with wheels or continuous (caterpillar) tracks and equipped with a gripping arm can grip a teat cup from a holder, move under a milking animal and attach the teat cup to a teat for milking. The use of a vehicle on wheels or continuous (caterpillar) tracks has several disadvantages. The manoeuverability of the vehicle under the animal is far from ideal. For example, a lateral movement is difficult to achieve. Moreover, the working environment of the vehicle may be highly polluted by the animals and slippery, which impairs its mobility.

There is a need for an improved, yet economical and simple milking system.

It is an object of the present invention to provide such an improved system.

The invention achieves the object at least in part by means of a system according to claim 1, in particular a system for milking a group of milking animals, the system comprising an accommodation space for the milking animals, a milk storage tank, and an automatic milking system for the automatic milking of milking animals, wherein the milking system comprises at least one milking station provided with milking cups for milking the animals, said milking cups being connected to the milk storage tank by means of milk discharge means comprising at least one flexible milk line, wherein the system further comprises at least one autonomous, self-propelled, legged vehicle provided with a gripping means, the legged vehicle being configured for automatically gripping and attaching milking cups to the teats of a milking animal in a milking station.

The use of a legged vehicle results in an efficient, yet relatively cheap and simple milking system. The legged vehicle is readily programmable in order to perform various tasks and configured for assisting in the milking process. Thus, a user-friendly, animal-friendly, economical and reliable milking system is realized.

The invention is based on the insight that in the restricted and polluted working environment of a milking system, an autonomous, legged vehicle is highly suitable for performing the attachment of the milking cups in a reliable and efficient way. This can be achieved in a both economical and animal-friendly, automated manner.

Suitable and advantageous embodiments are described in the dependent claims, as well as in the description below.

According to a first embodiment of the invention, the milking cups are provided at the at least one milking station in a holding means, which is configured for releasing the milking cups for the gripping means of the at least one legged vehicle. This facilitates the attachment of the milking cups in a simple way.

In a further embodiment, the holding means is positioned at both sides of the milking station and/or in a cavity below the floor of the milking station. In this way, an efficient attachment of the milking cups is enabled.

In another embodiment, the holding means is configured for orientating a milking cup in a desired direction. Thus, the efficiency of the attachment of the milking cups is further improved.

Advantageously, the gripping means is a mechanical or magnetic or electromagnetic gripper or a hook. This constitutes a simple, yet robust implementation.

According to another embodiment, at least one legged vehicle is configured for handling a water hose provided at or near a milking station and connected to a water supply in order to clean at least a part of a milking cup and/or a part of the milking station. In this way, the efficiency of the system is enhanced.

In yet another embodiment, at least one legged vehicle is configured for positioning a milking cup on a milking cup flushing means provided at or near a milking station. This also improves the efficiency of the system.

In accordance with a further embodiment, at least one legged vehicle is configured for handling the possible separation of milk obtained from a milking animal. Again, the efficiency of the milking system is thus improved.

Advantageously, the at least one legged vehicle is provided with at least one optical sensor, e.g. a camera, which is wirelessly connectable or connected to a control unit having a processor or a computer processing unit with image analysis means. In this way, the environment and the movements of the legged vehicle can be monitored and analysed.

In a further embodiment, the control unit is configured for analysing images of the at least one optical sensor in order to navigate the at least one legged vehicle and/or to determine the position of an animal to be milked and/or its teats. Thus, a very accurate and efficient milking system is realised.

Preferably, the control unit uses SLAM (Simultaneous Localization And Mapping). This known technique constitutes a highly suitable and efficient implementation.

In accordance with a further embodiment, at least one legged vehicle is provided with teat cleaning means having driving means. Including such means in the legged vehicle results in a very efficient milking system.

Advantageously, the system is provided with at least one charging station for the at least one legged vehicle, the charging station being provided with cleaning means for the teat cleaning means. This allows for cleaning of the teat cleaning means during charging of the legged vehicle, which is time-saving.

In yet a further embodiment, at least one legged vehicle is provided with an electronic gyroscope for navigation and feedback position control. In this way, the accuracy and efficiency of the navigation is enhanced.

According to another embodiment, the control unit is configured for determining, analysing and storing individual animal movements and/or behaviours and at least one legged vehicle is configured for anticipating relevant animal movements and/or behaviours when gripping and attaching milking cups to the animal in question. Thus, animal actions which would endanger any part of the equipment can be anticipated and circumvented, rendering the system more robust and reliable.

In yet another embodiment, at least one legged vehicle is configured for driving a milking animal out of a milking station. Blocking of the milking station can thus be avoided. This also improves the efficiency of the milking system.

In a further embodiment, at least one legged vehicle optically resembles an offspring animal of the milking animal. This positively affects the acceptance of the legged vehicle by the milking animals.

A method for milking a group of milking animals using a system as described is highly useful and efficient.

The invention will now be further explained with reference to the following Figures, which schematically illustrate the system according to the invention.
Figure 1 shows a legged robot vehicle for use in a system according to the invention;
Figure 2 shows a milking station with a cow and a legged vehicle in a system according to the invention;
Figure 3 schematically shows a legged vehicle picking up teat cleaning means for cleaning the teats of a cow;
Figure 4 schematically shows a legged vehicle assisting in the milking of a cow.

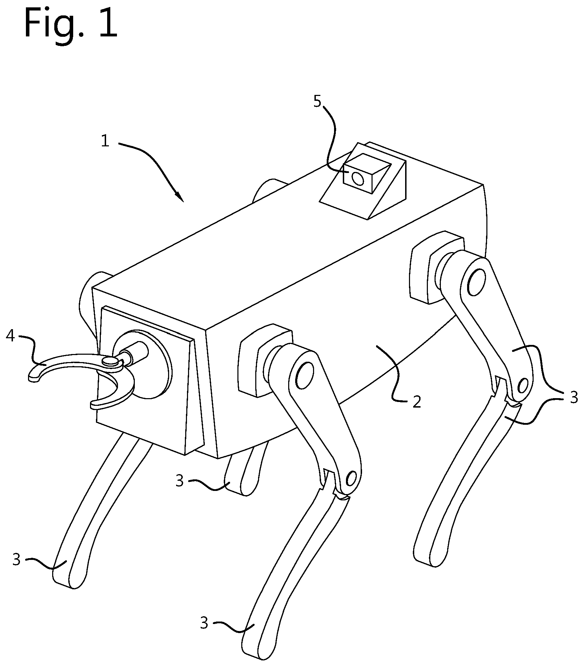

In Figure 1 a legged robot vehicle 1 for use in a system according to the invention is depicted. Legged robots are a type of electrically operated mobile robot which uses articulated limbs, such as leg mechanisms, to provide locomotion. They are more versatile than wheeled robots. Legged robots, or walking machines, are designed for locomotion on rough terrain and require control of leg actuators to maintain balance, sensors to determine foot placement and planning algorithms to determine the direction and speed of movement. Legged robots can be categorized by the number of limbs they use. Many-legged robots tend to be more stable, while fewer legs lends itself to greater manoeuverability.

Although other types of legged vehicle (bipedal or hexapod) can also be used in accordance with the invention, in the Figures a quadrupedal or four-legged robot vehicle 1 will be elaborated on. Quadrupedal or four-legged robots exhibit quadrupedal motion. They benefit from increased stability over bipedal robots, especially during movement. At slow speeds, a quadrupedal robot may move only one leg at a time, ensuring a stable tripod. Four-legged robots also benefit from a lower center of gravity than two-legged systems.

They are readily available on the market (e.g. Boston Dynamics' canine-inspired "Spot"^{®}) and are programmable to perform various tasks. For example, using a software development kit, programmers can develop custom applications for the machine to do various actions that can be used across different industries. The legged vehicle 1 is configured to perform several tasks in the system according to the invention, as will be elucidated below.

The legged vehicle 1 is provided with a body 2 carried by four articulated legs 3 enabling a doglike walking motion. The vehicle 1 is further provided with a gripping means 4, which is a mechanical or magnetic or electromagnetic gripper or a hook. Using the gripping means 4, the vehicle 1 is able to and configured for assisting in a milking process. The body 2 of the vehicle 1 is furthermore provided with at least one optical sensor, e.g. a camera 5, which is wirelessly connectable or connected to a control unit (not shown) having a processor or a computer processing unit with image analysis means. The camera 5 assists with the navigation of the vehicle 1 and any further tasks to be performed.

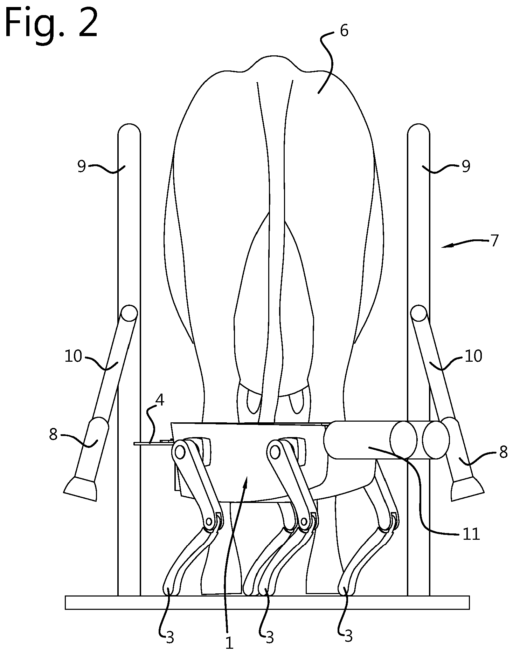

Figures 2, 3 and 4 illustrate a system for milking a group of milking animals. The system comprises an accommodation space for the milking animals 6, a milk storage tank (well-known and not shown), and an automatic milking system for the automatic milking of milking animals. This milking system comprises at least one milking station 7 provided with milking cups 8 for milking the animals 6, said milking cups 8 being connected to the milk storage tank by means of milk discharge means comprising at least one flexible milk line (well-known and not shown). The system further comprises at least one autonomous, self-propelled, legged vehicle 1 provided with a gripping means 4, the legged vehicle being configured for automatically gripping and attaching milking cups 8 to the teats of a milking animal 6 in a milking station 7.

In this way, an efficient, yet relatively cheap and simple milking system is realized. The legged vehicle 1 is readily programmable in order to perform various tasks and configured for assisting in the milking process. Thus, a user-friendly, animal-friendly, economical and reliable milking system is realized. In the restricted and polluted working environment of a milking system, an autonomous, legged vehicle 1 is highly suitable for performing the attachment of the milking cups 8 in a reliable and efficient way. This can be achieved in a both economical and animal-friendly, automated manner.

The system for milking a group of milking animals can accomodate a number of milking animals 6 in the accomodation space (e.g. in a stable or barn, provided with a feed/drink and a rest area, all known per se) bounded by walls or fences. There, a number of milking stations 7 are provided. A milking animal 6 can enter a milking station 7 from the accomodation space via an entry opening. These milking stations 7 are known as such, see for example EP 3 340 779 B1 (of the same applicant) for optional details: the station 7 may be provided with fences 9, animal identification means (known per se) and/or an activatable neck lock device (not shown) for partly immobilizing the animal 6 to be milked during the milking process. The cows 6 are enticed to enter the milking station 7 by providing drink there, and/or feed.

In the examples shown, the milking animal is a cow 6. Of course, the invention can also be applied when milking other milking animals, such as goats or camels. The system according to the invention can be applied in a free stall barn or in an open area like a meadow or pasture with cattle fences. It can also be applied in a combination of a stall and a pasture.

In Figure 2, the milking cups 8 are provided at the at least one milking station 7 in or on a holding means 10, which is configured for releasing the milking cups 8 for the gripping means 4 of the at least one legged vehicle 1. The holding means 10 are hingedly positioned at both sides of the milking station 7 on lateral fences 9. In another embodiment (not shown) the holding means 10 are positioned in a cavity below the floor of the milking station 7. Such a cavity may be provided such that it can be opened and closed. The holding means 10 may be configured for orientating a milking cup 8 in a desired direction by tilting it. Thus, attachment of the teat cup 8 to a teat of the animal 6 is facilitated. Although in Figure 2 only two elements of the holding means 10 are visible, there are of course four such elements: one for each milking cup 8.

The legged vehicle 1 can move in and around the milking station 7 and approaches the cow 6 from behind or from the side in order to grip and attach the teat cups 8. Although only a single legged vehicle 1 is depicted in the Figures, it is of course possible to use more than one legged vehicle 1 in the system.

In a manner known per se, the teat cups 8 are connected to the milk storage tank by means of milk discharge means comprising at least one flexible milk line. This standard milking equipment (with a vacuum source, a milk-air separator, etcetera) is not shown here.

At least one legged vehicle 1 is further provided with teat cleaning means 11 having driving means. These can be in the form of two parallel cleaning rolls, e.g. brushes, which are drivable (rotatable) in opposite directions. The teat cleaning means 11 are attached to the legged vehicle 1 in this embodiment, for example hingedly. The vehicle 1 is configured to clean the teats of an animal 6 to be milked by means of the teat cleaning means 11.

The at least one legged vehicle 1 is provided with at least one optical sensor, e.g. a camera 5, which is wirelessly connectable or connected to the control unit (not shown) having a processor or a computer processing unit with image analysis means. The control unit is configured for analysing images of the at least one optical sensor 5 in order to navigate the at least one legged vehicle 1 and/or to determine the position of an animal 6 to be milked and/or its teats. Using the camera 5 and the image analysis means, the vehicle 1 is controlled to move about at and in the milking station 7 and is configured to assist in the milking process by performing the required tasks, such as cleaning teats, gripping and attaching teat cups 8, removing teat cups 8 after milking, etcetera.

It is also possible to use LIDAR as an optical sensor. With this well-known technique, a hemispherical space near the vehicle 1 can be spatially mapped, also taking into account colour and light intensity.

To enable the navigation of the vehicle 1, the control unit can use SLAM (Simultaneous Localization And Mapping). This is a known navigation technique, see e.g. Wikipedia for details.

A charging station with an electric power supply source is of course present in the system (not shown), in order to enable the legged vehicle 1 to be recharged periodically. Advantageously, the charging station is provided with cleaning means for the teat cleaning means 11. This allows for cleaning of the teat cleaning means 11 during charging of the legged vehicle 1, which is time-saving.

The legged vehicle 1 may be provided with an electronic gyroscope for navigation and feedback position control. In this way, the accuracy and efficiency of the navigation is enhanced.

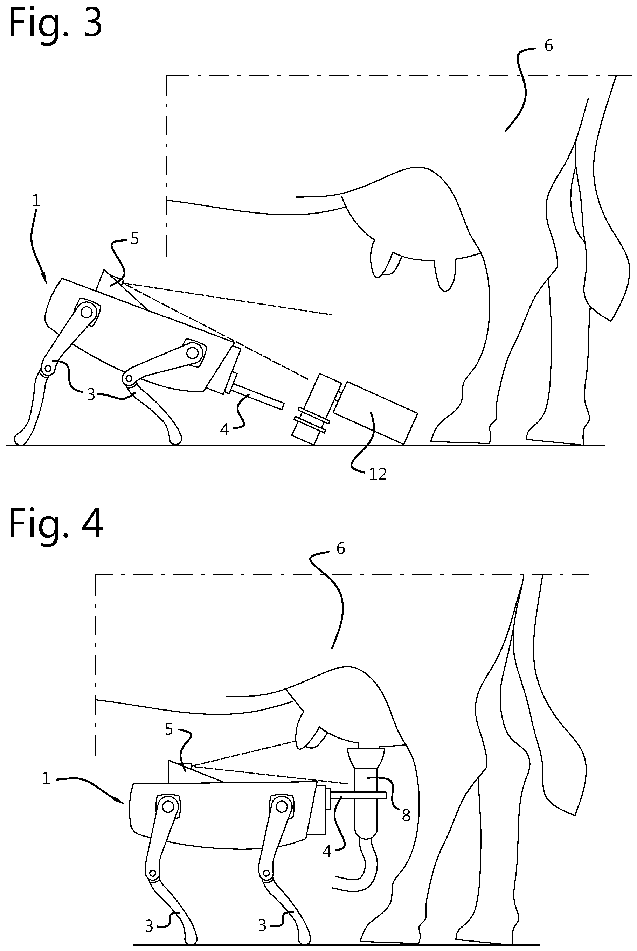

In Figure 3, a legged vehicle 1 is schematically shown picking up a loose teat cleaning device 12. This teat cleaning device 12 is not permanently attached to the vehicle 1, but connectable to it. It may be stored somewhere near or in the milking station 7. Preferably, it comprises parallel cleaning brushes, rotatable in opposite directions, and a drive unit. This is an alternative to the embodiment shown in Figure 2. Only two legs 3 of the legged vehicle 1 are shown for clarity.

Figure 4 schematically illustrates the attachment of a teat cup 8 to a teat of a cow 6 by means of the legged vehicle 1 using its gripping means 4. Again, only two legs 3 of the legged vehicle 1 are shown for clarity.

Other tasks may be performed by the legged vehicle 1. The least one legged vehicle 1 is configured for handling a water hose (not shown) provided at or near a milking station 7 and connected to a water supply (not shown) in order to clean at least a part of a milking cup 8 and/or a part of the milking station 7. In this way, the efficiency of the system is further enhanced. In yet another embodiment, at least one legged vehicle 1 is configured for positioning a milking cup 8 on a milking cup flushing means (known as such, not shown) provided at or near a milking station 7. This also further improves the efficiency of the system. In accordance with a further embodiment, at least one legged vehicle 1 is configured for handling the possible separation of milk obtained from a milking animal 6.

Advantageously, the control unit is configured for determining, analysing and storing individual animal movements and/or behaviours and the, or at least one, legged vehicle 1 is configured for anticipating relevant animal movements and/or behaviours when gripping and attaching milking cups 8 to the animal 6 in question. Optionally, an additional radar sensor (not shown) can be used for this purpose. Thus, animal actions which would endanger any part of the equipment (e.g. kicks) can be anticipated and circumvented, rendering the system more robust and reliable. For example, the legged vehicle may avoid the space directly behind a cow's hind legs for a certain cow 6 that was found to be restless.

In a further embodiment, the or at least one legged vehicle 1 is configured for driving a milking animal 6 out of a milking station 7. A gentle slap to one of the cow's legs suffices for this. Blocking of the milking station 7 can thus be avoided. This also improves the efficiency of the milking system.

Optionally, the legged vehicle 1 optically resembles an offspring animal of the milking animal 6. For example, the colour and shape and even the sound and smell of a young animal can be simulated by the legged vehicle 1. This positively affects the acceptance of the legged vehicle 1 by the milking animals 6.

Thus, a highly efficient and accurate, automated, yet animal-friendly and cheap milking system and method are realized, which can be used not only in a traditional milking parlour setting in a barn (where the Figures 2, 3 and 4 refer to), but also with carrousel milking, outside milking in a pasture with one or more mobile milking boxes, etcetera. The legged vehicle 1 then replaces the complicated attachment mechanism of a milking robot.

### REFERENCE NUMERAL LIST

- 1: legged vehicle
- 2: body
- 3: articulated leg
- 4: gripping means
- 5: camera
- 6: milking animal
- 7: milking station
- 8: milking cup
- 9: fence
- 10: holding means
- 11: teat cleaning means
- 12: teat cleaning means

## Claims

1. A system for milking a group of milking animals (6), the system comprising an accommodation space for the milking animals (6), a milk storage tank, and an automatic milking system for the automatic milking of milking animals (6), wherein the milking system comprises at least one milking station (7) provided with milking cups (8) for milking the animals (6), said milking cups (8) being connected to the milk storage tank by means of milk discharge means comprising at least one flexible milk line, wherein the system further comprises at least one autonomous, self-propelled, legged vehicle (1) provided with a gripping means (4), the legged vehicle (1) being configured for automatically gripping and attaching milking cups (8) to the teats of a milking animal (6) in a milking station (7).

2. System according to claim 1, wherein the milking cups (8) are provided at the at least one milking station (7) in or on a holding means (10), which is configured for releasing the milking cups (8) for the gripping means (4) of the at least one legged vehicle (1).

3. System according to claim 2, wherein the holding means (10) is positioned at both sides of the milking station (7) and/or in a cavity below the floor of the milking station (7).

4. System according to any one of claims 2 - 3, wherein the holding means (10) is configured for orientating a milking cup (8) in a desired direction.

5. System according to any one of claims 1 - 4, wherein the gripping means (4) is a mechanical or magnetic or electromagnetic gripper or a hook.

6. System according to any one of claims 1 - 5, wherein at least one legged vehicle (1) is configured for handling a water hose provided at or near a milking station (7) and connected to a water supply in order to clean at least a part of a milking cup (8) and/or a part of the milking station (7).

7. System according to any one of claims 1 - 6, wherein at least one legged vehicle (1) is configured for positioning a milking cup (8) on a milking cup flushing means provided at or near a milking station (7).

8. System according to any one of claims 1 - 7, wherein at least one legged vehicle (1) is configured for handling the possible separation of milk obtained from a milking animal (6).

9. System according to any one of claims 1 - 8, wherein the at least one legged vehicle (1) is provided with at least one optical sensor, e.g. a camera (5), which is wirelessly connectable or connected to a control unit having a processor or a computer processing unit with image analysis means.

10. System according to claim 9, wherein the control unit is configured for analysing images of the at least one optical sensor (5) in order to navigate the at least one legged vehicle (1) and/or to determine the position of an animal (6) to be milked and/or its teats.

11. System according to claim 10, wherein the control unit uses SLAM (Simultaneous Localization And Mapping).

12. System according to any one of claims 1 - 11, wherein at least one legged vehicle (1) is provided with teat cleaning means (11, 12) having driving means.

13. System according to claim 12, wherein the system is provided with at least one charging station for the at least one legged vehicle (1), the charging station being provided with cleaning means for the teat cleaning means (11, 12).

14. System according to any one of claims 1 - 13, wherein at least one legged vehicle (1) is provided with an electronic gyroscope for navigation and feedback position control.

15. System according to any one of claims 9 - 14, wherein the control unit is configured for determining, analysing and storing individual animal movements and/or behaviours and wherein at least one legged vehicle (1) is configured for anticipating relevant animal movements and/or behaviours when gripping and attaching milking cups (8) to the animal in question.

16. System according to any one of claims 1 - 15, wherein at least one legged vehicle (1) is configured for driving a milking animal (6) out of a milking station (7).

17. System according to any one of claims 1 - 16, wherein at least one legged vehicle (1) optically resembles an offspring animal of the milking animal (6).

18. A method for milking a group of milking animals (6) using a system as claimed in any one of the previous claims.
